# EUROPEAN PATENT SPECIFICATION

(11) **EP 4 397 881 B1**
(45) Date of publication and mention of the grant of the patent: **29.01.2025**
(21) Application number: 23197035.1
(22) Date of filing: 13.09.2023
(51) Int. Cl.: F16D 65/00

(54) **BRAKE DUST COLLECTOR**
BREMSSTAUBSAMMLER
COLLECTEUR DE POUSSIÈRE DE FREIN

(30) Priority: 09.01.2023 KR 20230002867
(43) Date of publication of application: 10.07.2024
(73) Proprietor: HL Mando Corporation, Pyeongtaek-si, Gyeonggi-do 17962 (KR)
(72) Inventor: HUR, Jaejin, 13455 Seongnam-si, Gyeonggi-do (KR)
(74) Representative: BCKIP Part mbB

(56) References cited:
- DE-A1- 102020 118 880
- DE-A1- 102021 102 775
- DE-U1- 8 428 099
- KR-B1- 102 112 358
- US-A1- 2009 071 767
- US-A1- 2010 065 387
- US-A1- 2017 198 772
- US-A1- 2018 031 059

## Description

### TECHNICAL FIELD

The present invention relates to a brake dust collector, and more particularly, to a brake dust collector fastened to a trailing portion of a housing and capable of not only collecting dust generated by friction between a brake pad and a disc but also improving stiffness of the housing.

### BACKGROUND

As the importance of environmental protection is emphasized, environmental friendliness has become a big issue in the automobile industry, and regulations on pollutants emitted from automobiles are also being continuously strengthened.

US 2017/198772 A1 discloses a brake dust collector of the state of the art externally mounted to a brake calliper and comprising a collecting tank provided with a filter.

Meanwhile, pollutants emitted from vehicles may be largely classified into pollutants emitted from an exhaust system and pollutants emitted from a non-exhaust system. The pollutants emitted from the exhaust system are pollutants contained in exhaust gas, which is generated when an engine of a vehicle is driven, and are already subject to regulations, while the pollutants emitted from the non-exhaust system are expected to be subject to corresponding regulations.

Specifically, among the pollutants emitted from the non-exhaust system, dust generated due to abrasion caused by a frictional force between a brake pad and a disc during vehicle braking contains a large number of harmful substances, so that a method for minimizing the dust is required in line with the fact that regulations on harmful dust and fine dust are gradually tightening.

In addition, since a fixed-type caliper brake including a monoblock caliper usually provides relatively stable braking power even in high-speed repetition, vehicle models to which the fixed-type caliper brake is applied are relatively high-performance vehicles and a large amount of dust is generated between discs and brake pads, and thus a method of reducing the emission of dust is required all the more urgently.

Meanwhile, in order to meet the requirement, a conventional dust collector is provided as a separate device for dust collection on one side of a caliper housing, which reduces aesthetics and also reduces maintainability because the device body should be removed from the vehicle to clean or replace the filter.

### SUMMARY OF THE INVENTION

It is one of the objects of the present invention to provide a brake dust collector capable of effectively reducing dust that is generated by a friction force between a disc and a brake pad and discharged to the outside of a housing.

To this end, the present invention provides brake dust collector in accordance with claim 1.

Advantageous embodiments will be set forth in the dependent claims, in the description which follows and in the drawings.

In accordance with the present invention, a brake dust collector includes a pair of brake pads that are respectively disposed on both sides of a disc rotating together with a wheel and are in close contact with or separated from the disc, e.g., according to a forward and backward movement of a piston, a housing having the brake pads embedded therein and provided to cover at least a part of the disc, a main fastening portion having a main fastening hole formed to penetrate a trailing portion of the housing in a radial direction, and a main filter module including a main filter provided in the main fastening hole and a main filter cover through which at least one main flow hole is formed to penetrate and which supports the main filter, and the main filter module is provided to be detachable from the main fastening portion.

Since the main filter module is detachably mounted to the main fastening portion, the brake dust collector is capable of improving maintainability of a filter by forming a filter module to be detachable.

It is another advantage of the present invention that the brake dust collector is capable of reinforcing stiffness of a housing itself and also preventing the deterioration in aesthetics of a caliper due to a filter module since the filter module is formed to be detachable from a portion formed to extend to a trailing portion side of the housing.

It is yet another advantage of the present invention that the brake dust collector is capable of facilitating management of a filter by enabling the filter to be cleansed by washing liquid and the like even in a state where a filter module is mounted, since the main flow hole allows water to flow towards the main filter.

The main filter module may be bolted to the main fastening portion.

The main fastening portion may further include a fastening bracket formed to protrude in the radial direction and a fastening hole formed to penetrate the fastening bracket in a forward and backward direction of the brake pads so that a bolt member passes therethrough, and the main filter module and the fastening bracket may be bolted with the bolt member in the forward and backward direction of the brake pads.

The main filter may be made of a metal with corrosion resistance such as, for example, stainless steel.

The main filter cover may be mounted with an end side at a predetermined space from the housing or the main fastening portion. For example, the main filter cover may be positioned such that a gap extends between an edge of the main filter cover and at least a part of the main fastening portion, e.g., to allow passage of air therethrough.

The main filter cover may include an outer circumferential portion formed in a direction parallel to an outer circumferential surface of the disc and a pair of planar portions disposed in a direction parallel to both side surfaces of the disc, and the main flow hole may be formed to penetrate at least one of the outer circumferential portion or the pair of planar portions.

In addition, the housing may be formed as a monoblock.

Meanwhile, in accordance with another embodiment of the present invention, a brake dust collector includes a pair of brake pads that are respectively disposed on both sides of a disc rotating together with a wheel and are in close contact with or separated from the disc according to a forward and backward movement of a piston, a housing having the brake pads embedded therein and provided to cover at least a part of the disc, a main fastening portion having a main fastening hole formed to penetrate a trailing portion of the housing in a radial direction, a main filter module provided to be detachable from the main fastening portion and including a main filter provided in the main fastening hole and a main filter cover through which at least one main flow hole is formed to penetrate and which supports the main filter, a sub fastening portion having a sub fastening hole formed to penetrate a window of the housing in the radial direction, and a sub filter module provided to be detachable from the sub fastening portion and provided as a sub filter provided in the sub fastening hole, and a sub filter cover configured to support the sub filter.

It is an advantage of this embodiment that the brake dust collector may improve filter efficiency and extending filter life by providing the sub filter module on the window side.

The main filter module and the sub filter module may be bolted to the main fastening portion and the sub fastening portion, respectively.

The main fastening portion may further include a fastening bracket formed to protrude in the radial direction and a fastening hole formed to penetrate the fastening bracket in a forward and backward direction of the brake pads so that a bolt member passes therethrough, and the main filter module and the fastening bracket may be bolted with the bolt member in the forward and backward direction of the brake pads.

The sub filter cover may further include a rib formed to protrude from an outer surface and a fastening hole formed to penetrate the rib so that a bolt member passes therethrough, and the sub filter module and the rib may be coupled to each other as the bolt member penetrates the fastening hole and is bolted to the housing or the sub fastening portion.

Each of the main filter and the sub filter may be made of a metal with corrosion resistance and/or heat resistance such as, for example, stainless steel..

The main filter cover may be mounted with an end side at a predetermined space from the housing or the main fastening portion. For example, the main filter cover may be positioned such that a gap extends between an edge of the main filter cover and at least a part of the main fastening portion, e.g., to allow passage of air therethrough.

The sub filter cover may be mounted with an end side at a predetermined space from the housing or the sub fastening portion. In particular, a bottom surface of the sub filter cover that faces the housing, i.e., the sub fastening portion, may be comprise one or more portions that are positioned spaced to the housing or the sub fastening portion, for example, to allow air to pass therebetween.

The sub filter cover may further include a flow passage formed to be recessed on a bottom surface and formed to extend from a leading portion to a trailing portion. It is an advantage of providing the flow passage that heat dissipation performance in exhausting heat caused by friction between a disc and a brake pad to the outside of a housing can be further improved.

The main filter cover may include an outer circumferential portion formed in a direction parallel to an outer circumferential surface of the disc and a pair of planar portions disposed in a direction parallel to both sides of the disc, and the main flow hole may be formed to penetrate at least one of the outer circumferential portion or the pair of planar portions.

The main flow hole provided in the outer circumferential portion may be formed to be tilted downward from an inner side to an outer side of the main filter cover. Thereby, the brake dust collector is capable of collecting dust through a tangential air flow generated by rotation of a disc without a separate flow control element for dust guide. Generally, the central axes of the main flow hole may be inclined so that a non-perpendicular angle exists between the central axis and a tangent to the circumferential surface of the disc at a position where the central axis intersects the circumferential surface of the disc. Optionally, the central axis of the main flow hole may be inclined in a direction away from the leading portion. In other words, an angle at a side of the central axis facing the trailing portion may be smaller than 90°, while an angle at a side of the central axis facing the leading portion 210 may be greater than 90°.

The housing may be formed as a monoblock.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is an exploded perspective view illustrating a brake dust collector in accordance with one embodiment of the present invention;
FIG. 2 is a view illustrating a state where the brake dust collector in accordance with one embodiment of the present invention is assembled;
FIG. 3 is an exploded perspective view illustrating a brake dust collector in accordance with another embodiment of the present invention;
FIG. 4 is a perspective view illustrating a state where the brake dust collector in accordance with another embodiment of the present invention is assembled; and
FIG. 5 is a side view illustrating a state where the brake dust collector in accordance with another embodiment of the present invention is assembled.

### DETAILED DESCRIPTION

Hereinafter, embodiments of the present invention will be described in detail with reference to the accompanying drawings. The following embodiments are provided to fully convey the present invention to a person having ordinary skill in the art. The present invention is not limited to the embodiments shown herein but may be embodied in other forms. The drawings may omit the illustration of parts not related to the description in order to clarify the present invention, and slightly exaggerate the size of the components to help understanding.

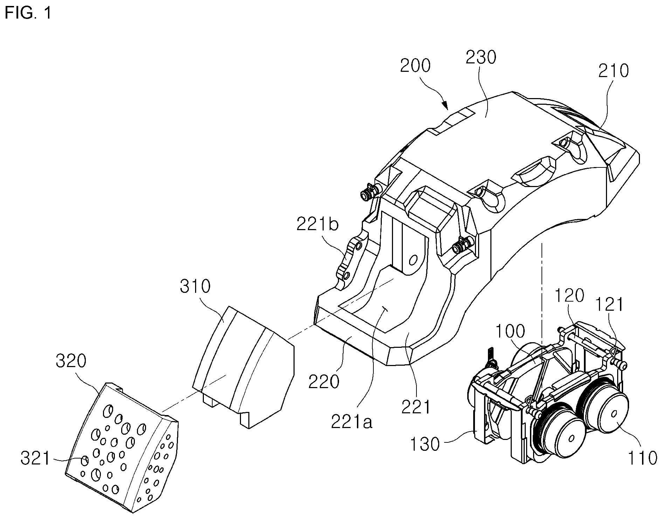

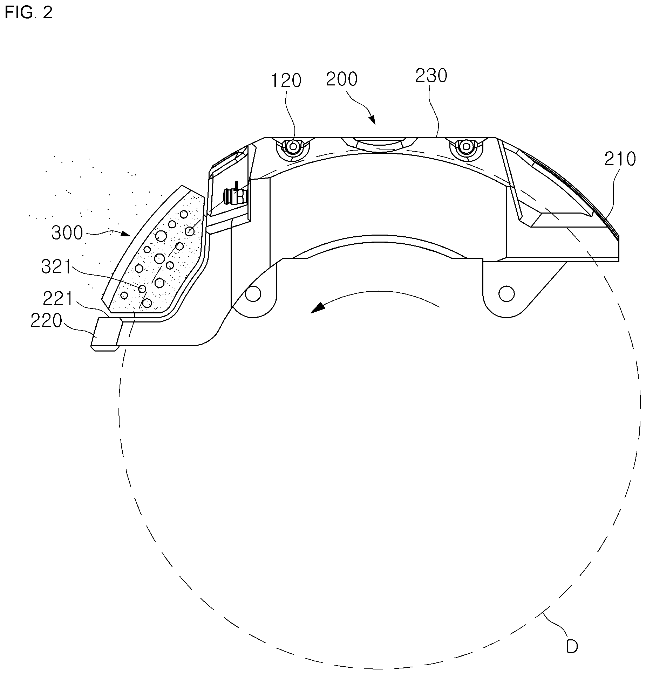

FIG. 1 is an exploded perspective view illustrating a brake dust, and FIG. 2 is a view illustrating a state where the brake dust collector is coupled.

Referring to FIGS. 1 and 2, a brake dust collector includes a brake pad 100, a housing 200, and a main filter module 300.

More specifically, the brake pad 100 includes a piston 110, a guide pin 120, and a pad spring 130 disposed on both sides of a disc D. The disc D rotates together with a wheel, and the brake pad 100 is movable into close contact with or to be separated from both sides of the disc D by means of the piston 110. When the brake pad 100 is in contact with the disc D, it provides a braking force to the disc D.

Herein, the piston 110 may move the brake pad 100 in a forward direction and a backward direction, that is, towards and away from the disc D. In this regard, various methods including a hydraulic method or an electromechanical method may be employed, and although FIG. 1 illustrates that the piston 110 is coupled to the brake pad 100, the piston 110 may be installed by being inserted into a groove provided inside the housing 200.

In addition, the guide pin 120 is coupled to the brake pad 100 by penetrating both the upper sides of the brake pad 100. The guide pin 120 is longitudinally placed in the forward and backward direction of the brake pad 100, and thus guides the forward and backward movement of the brake pad 100.

In addition, although the guide pin 120 is illustrated to be coupled to the brake pad 100 in FIG. 1, the guide pin 120 may be actually formed, as illustrated in FIG. 2, with one end penetrating the housing 200 and supported inside the housing 200 and the other end supported by being exposed to the outside of the housing 200.

Herein, the guide pin 120 may be fixed by a fastener such as a fixing clip 121 to be prevented from being separated from the housing 200.

In addition, the pad spring 130 may be a leaf spring where a plurality of bent portions are formed. The pad spring 130 is installed on each of both ends of the brake pad 100 to cover a part of the guide pin 120 and support a lower part of the brake pad 100. Thus, the pad spring 130 not only supports the brake pad 100, but also enables the smooth forward and backward movement of the brake pad 100.

Meanwhile, the brake pad 100 is not limited to the above-described configuration and structure but may apply various methods of providing a braking force to the disc D by simultaneously being in close contact with or separated from both sides of the disc D.

In addition, the brake pad 100 may apply brake structures with various response types.

Meanwhile, the housing 200 has a cover shape capable of covering a part of the disc D, while the brake pad 100 is installed on an inner side or accommodated in the housing 200. and the housing 200 includes a first or leading portion 210 formed on one side, a second or trailing portion 220 formed on the other side, and a window 230 formed between the leading portion 210 and the trailing portion 220. For example, the housing 200 may be formed in an arc shape extending along a circumferential direction, wherein the leading portion 210 is formed in a first end region of the housing 200 with respect to the circumferential direction, and the trailing portion is formed in an opposite second end region of the housing 200 with respect to the circumferential direction.

In addition, the housing 200 may be formed in various structures including a monoblock type where the leading portion 210, the trailing portion 220, and the window 230 are integrally formed.

More specifically, if the disc D rotates in a predefined rotation direction, e.g., in the counterclockwise direction, as illustrated in FIG. 2, a point on the circumference of the disc D enters the housing 200 at the leading portion 210, passes the window 230, and exits the housing 200 at the trailing portion 220. In the view illustrated in FIG. 2, the leading portion 210 and the trailing portion 220 are on the right side and the left side, respectively, and the window 230 is formed between the leading portion 210 and the trailing portion 220.

In the example of FIG. 2, the trailing portion 220 is formed to extend in a lower left direction. Generally, the trailing portion 220 includes a main fastening portion 221 to which the main filter module 300 is fastened.

The main fastening portion 220 includes a main fastening hole 221a, which is formed to penetrate toward the disc D, and a fastening bracket 221b for mounting the main filter module 300. As shown in Fig. 1, the main fastening hole 221a forms an opening in the trailing portion 220 exposing the disc D.

In addition, although the fastening bracket 221b may be embodied in various shapes, when the housing 200 is mounted in a vehicle and the like, the fastening bracket 221b may be formed on one side, in particular, a lateral side of the main fastening hole 221a in order to be prevented from exposure to the outside.

Meanwhile, the main filter module 300 includes a main filter 310, which covers the main fastening hole 221a and has a cover shape corresponding to a shape of the trailing portion 220. A main filter cover 320 may be configured to support and protect the main filter 310.

In addition, although various known materials are applicable, the main filter 310 may be made of a corrosion-resistant metal material and/or heat resistant metal material to minimize deformation due to an external force. For example, the main filter 310 may be made of stainless steel.

In addition, the main filter cover 320 includes a multiple number of main flow holes 321, which are formed on an overall surface. The main filter cover 320 may be formed of a metal material to protect and support the main filter 310. The main filter cover 320 may, for example, have substantially an arc shape. As exemplarily shown in FIGS. 1 and 2, the main filter cover 320 may include an outer circumferential portion, which may, for example, be arc shaped, and planar portions protruding from the outer circumferential portion, wherein the planar portions extend parallel to each other and transverse to the outer circumferential portion. When mounted to the housing 200, the outer circumferential portion extends parallel to an outer circumferential surface of the disc D, and the planar portions extend in a direction parallel to both side surfaces of the disc D.

Herein, the main flow holes 321 may be formed to have a sufficient area so that various fluids can smoothly pass therethrough.

In addition, when the main flow holes 321 are formed in an outer circumferential portion that is a surface located on an outer circumferential surface of the disc D, the main flow holes 321 may be formed to be tilted downward from the inner side to the outer side. That is, assuming that an inner surface of the outer circumferential portion and an outer surface of outer circumferential portion are parallel, a central axis of the main flow holes 321 extends non-perpendicular to the inner and outer surface of the outer circumferential portion. More generally, the central axes of the main flow holes 321 may be inclined so that a non-perpendicular angle exists between the respective central axis and a tangent to the circumferential surface of the disc D at a position where the central axis intersects the circumferential surface of the disc D. In particular, the central axes of the main flow holes 321 may be inclined in a direction away from the leading portion 210. In other words, an angle at a side of the central axis facing the trailing portion 220 may be smaller than 90°, while an angle at a side of the central axis facing the leading portion 210 may be greater than 90°.Therefore, the main flow holes 321 may correspond to a direction of an air flow generated by the rotation of the disc D so that heat generated by the braking operation may be discharged more effectively.

In addition, a bush structure (not illustrated) may be applied to a location corresponding to the fastening bracket 221b in order to bolt the main filter cover 320 to the fastening bracket 221b. Generally, the main filter cover 320 may be mounted to the housing 200, in particular, detachably mounted to the housing 200. For example, as shown in FIG. 2, the main filter cover 320 may be mounted to the main fastening portion 221. Irrespective of how the main filter cover 320 is fixed, the main filter cover 320 may be mounted such that an end side of the main filter cover 320 is positioned at a predetermined distance from the housing 200 or the main fastening portion 221. For example, the main filter cover 320 may be positioned such that a gap extends between an edge of the main filter cover 320 and at least a part of the main fastening portion 221, as schematically shown in Fig. 2.

In addition, in order to sufficiently discharge heat generated by friction between the brake pad 100 and the disc D to the outside, when the main filter module 300 is mounted on the main fastening portion 220, a predetermined gap may be formed so that each of the upper and lower ends does not come into close contact with the main fastening portion 220.

Accordingly, in the brake dust collector, the main filter module 300 may be easily detached from the housing 200, and the main filter 310 may also be cleansed by high-pressure washing liquid flowing into the main flow holes 321, while the main filter module 300 is mounted on the housing 200.

In addition, in the brake dust collector, since the main filter module 300 is mounted on the side of the trailing portion 220, although a separate air flow control element is omitted as illustrated in FIG. 2, the air flow generated by the rotation of the disc D effectively guides dust, which is generated by friction between the brake pad 100 and the disc D, to the inner side of the main filter 310, so that dust collection efficiency may be improved.

In addition, in the brake dust collector, the stiffness of the housing 200 may be further improved since the trailing portion 220 is formed to extend to mount the main filter module 300 and the main filter module 300 is bolted thereto.

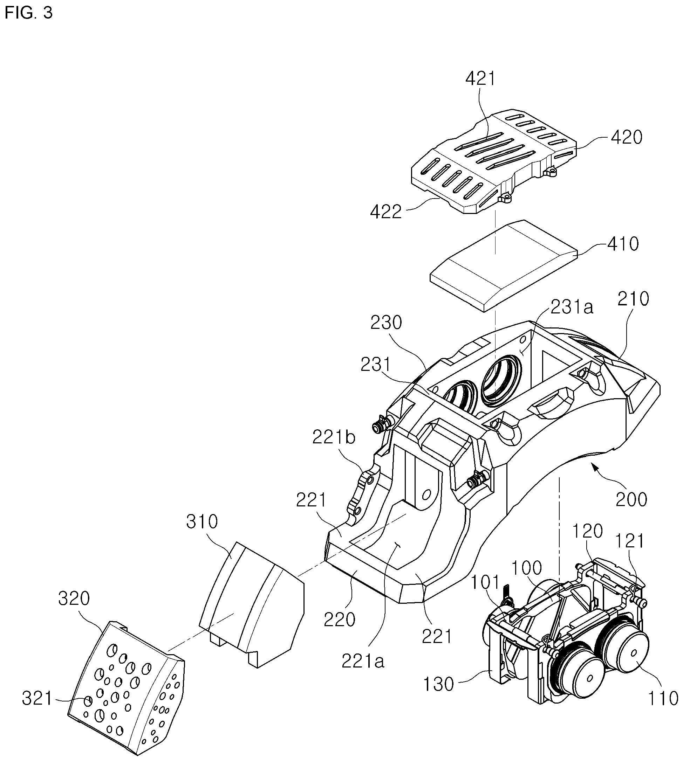

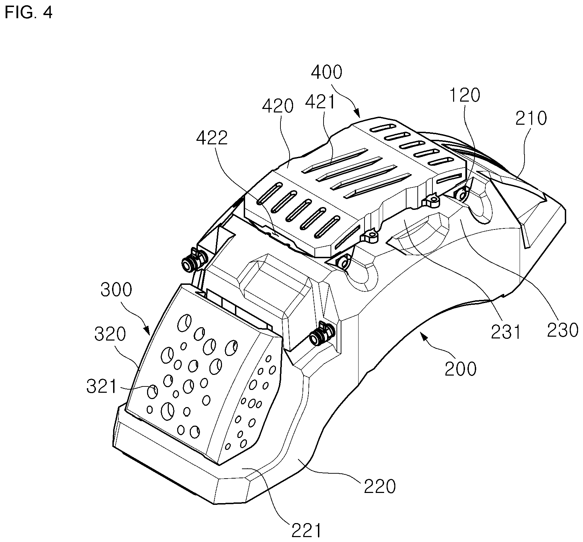

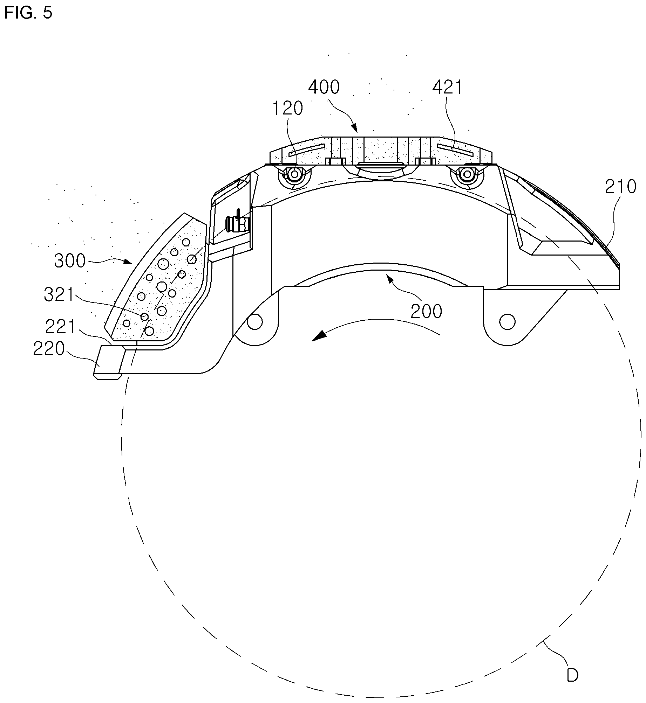

Meanwhile, FIG. 3 is an exploded perspective view illustrating a further brake dust collector. FIG. 4 is a perspective view illustrating a state where the brake dust collector is coupled. FIG. 5 is a side view illustrating a state where the brake dust collector is coupled.

Referring to FIGS. 3 to 5, the brake dust collector may further include a sub filter module 400 and has the same or similar configuration to the above-described embodiment.

To this end, in the housing 200, a sub fastening portion 231 detachable from the sub filter module 400 is additionally formed by including a sub fastening hole 231a formed to penetrate to the side of the disc D in the window 230. That is, the window 230 of the housing 200 includes the sub fastening hole 231a through which the disc D is exposed.

More specifically, as illustrated in FIG. 3, the brake pad 100 may be installed in the housing 200 more easily since the sub fastening hole 231a is formed above the brake pad 100 embedded or accommodated in the housing 200. In other words, the sub fastening hole 231a is formed on a circumferential position corresponding to the position of the brake pad 100.

Meanwhile, the sub filter module 400 includes a sub filter 410, which covers the sub fastening hole 231a and has a cover shape corresponding to the shape of the window 230. The sub filter module 400 also includes a sub filter cover 420 configured to support and protect the sub filter 410.

Herein, although various known materials are applicable, the sub filter 410 may be made of a corrosion-resistant metal or heat-resistant metal material to minimize deformation due to an external force. For example, the sub filter 410 may be made of stainless steel.

In addition, the sub filter cover 420 includes a multiple number of sub flow holes 421 formed on an overall surface and a flow passage 422. The sub filter cover 420 is formed on a lower side to extend to be recessed in a direction from the leading portion 210 to the trailing portion 220. The sub filter cover 420 is formed of a metal material to protect and support the sub filter 410, and may be bolted to the sub fastening portion 231.

Herein, the sub flow holes 421 may be formed to have a sufficient area so that various fluids can pass through smoothly. For example, the sub flow holes 421 may be in the form of longitudinal slits extending substantially along the circumferential direction of the housing 200, as shown in FIG. 4. As further shown in FIG. 4, the optional flow passage 422 may be defined by a recess or formed in a surface of the sub filter cover 420 facing the window 230, e.g., in a bottom surface of the sub filter cover 422. Generally, the sub filter cover 420 may be mounted with at least part of the bottom surface of the sub filter cover 420 at predetermined distance from the housing 200 or the sub fastening portion 231.

In addition, through the flow passage 422, the sub filter module 400 does not completely close the sub fastening hole 231a but forms a predetermined gap on the side of the leading portion 210 and on the side of the trailing portion 220. As a result, the heat dissipation performance may be further improved for heat generated during friction between the brake pad 100 and the disc D.

Accordingly, as illustrated in FIG. 5, the brake dust collector may reduce dust generated by friction between the brake pad 100 and the disc D more effectively through the main filter module 300 and the sub filter module 400.

In addition, in the brake dust collector, the main filter module 300 and the sub filter module 400 may be easily detached from the housing 200, and the main filter 310 and the sub filter 410 may also be cleansed by high-pressure washing liquid flowing into the main flow holes 321 and the sub flow holes 421, while the main filter module 300 and the sub filter module 400 are mounted on the housing 200, so that filter life extension and efficiency improvement may be expected.

A brake dust collector in accordance with the present invention can effectively collect dust that is generated by a friction force between a disc and a brake pad and discharged to the outside of a housing.

The brake dust collector described above can collect dust through a tangential air flow generated by rotation of a disc without a separate flow control element for dust guide.

The brake dust collector described above can improve maintainability by forming a filter module to be detachable.

The brake dust collector described above can not only reinforce stiffness of a housing itself but also prevent the deterioration in aesthetics due to a filter module since the filter module is formed to be detachable from a portion formed to extend to a trailing portion side of the housing.

The brake dust collector described above can improve filter efficiency and extend filter life by providing an additional filter module on a window side.

The brake dust collector described above can prevent decline of filter efficiency by enabling a filter to be cleansed by washing liquid and the like even in a state where a filter module is mounted.
the brake dust collector described above can further improve heat dissipation performance in exhausting heat caused by friction between a disc and a brake pad to the outside of a housing.

Although a few embodiments of the present invention have been shown and described, it would be appreciated by those skilled in the art that changes may be made in these embodiments without departing from the scope of the invention which is defined in the claims.

## Claims

1. A brake dust collector comprising:
a pair of brake pads (100) that are respectively disposed on both sides of a disc (D) configured to rotate together with a wheel, the pair of brake pads (100) being movable into contact with or to be separated from the disc (D);
a housing (200) accommodating the brake pads (100) and being configured to cover at least a part of the disc (D); the brake dust collector being **characterised by**
a main fastening portion (221) having a main fastening hole (221a) formed to penetrate a trailing portion of the housing (200) in a radial direction; and
a main filter module (300) including a main filter (310) provided in the main fastening hole (221a) and a main filter cover (320) through which at least one main flow hole (321) is formed to penetrate and which is configured to support the main filter (310),
wherein the main filter module (300) is configured to be detachable from the main fastening portion (221).

2. The brake dust collector of claim 1, wherein the main filter module (300) is bolted to the main fastening portion (221).

3. The brake dust collector of claim 2, wherein the main fastening portion (221) further comprises:
a fastening bracket (221b) formed to protrude in the radial direction; and
a fastening hole formed to penetrate the fastening bracket (221b) in a direction transverse to the disc (D),
wherein the main filter module (300) and the fastening bracket (221b) are bolted with a bolt passing through the fastening hole of the fastening bracket (221b).

4. The brake dust collector of any one of the preceding claims, wherein the main filter (310) is made of a metal with corrosion resistance and heat resistance.

5. The brake dust collector of any one of the preceding claims, wherein the main filter cover (320) is mounted such that an end side of the main filter cover (320) is positioned at a predetermined distance from the housing (200) or the main fastening portion (221).

6. The brake dust collector of any one of the preceding claims, wherein the main filter cover (320) comprises an outer circumferential portion formed in a direction parallel to an outer circumferential surface of the disc (D) and a pair of planar portions disposed in a direction parallel to both side surfaces of the disc (D), and
the main flow hole (321) is formed to penetrate at least one of the outer circumferential portion or the pair of planar portions.

7. The brake dust collector of claim 6, wherein the main flow hole (321) is provided in the outer circumferential portion and is formed to be inclined such that a non-perpendicular angle exists between a central axis of the main flow hole (321) and a tangent to the outer circumferential surface of the disc (D).

8. The brake dust collector of any one of the preceding claims, wherein the housing (200) is formed as a monoblock.

9. The
brake dust collector of any one of the preceding claims, further comprising:
a sub fastening portion (231) having a sub fastening hole (231a) formed to penetrate a window (230) of the housing (200) in the radial direction; and
a sub filter module (400) provided to be detachable from the sub fastening portion (231) and including a sub filter (410) provided in the sub fastening hole (231a) and a sub filter cover (420) configured to support the sub filter (410).

10. The brake dust collector of claim 9, wherein the sub filter module (400) is bolted to the sub fastening portion (231).

11. The brake dust collector of claim 9 or 10, wherein the sub filter cover (420) further comprises a rib formed to protrude from an outer surface and a fastening hole formed to penetrate the rib, and
the sub filter module (400) and the rib are coupled to each other and the sub filter module (400) is bolted to the housing (200) or the sub fastening portion (231) by a bolt member penetrating the fastening hole formed in the rib.

12. The brake dust collector of any one of claims 9 to 11, wherein the sub filter (410) is made of a metal with corrosion resistance and heat resistance.

13. The brake dust collector of any one of claims 9 to 12, wherein the sub filter cover (420) is mounted with at least a part of a bottom surface at a predetermined space from the housing (200) or the sub fastening portion (231).

14. The brake dust collector of claim 13, wherein the sub filter cover (420) comprises a flow passage (422) formed to be recessed on the bottom surface and formed to extend from a leading portion to a trailing portion of the sub filter cover (420).

## Patentansprüche

1. Bremsstaubsammler, umfassend:
ein Paar Bremsbeläge (100), die jeweils auf beiden Seiten einer Scheibe (D) angeordnet sind, die so konfiguriert ist, dass sie sich zusammen mit einem Rad dreht, wobei das Paar Bremsbeläge (100) in den Kontakt mit der Scheibe (D) bewegt werden kann oder von dieser getrennt werden kann;
ein Gehäuse (200), das die Bremsbeläge (100) aufnimmt und so konfiguriert ist, dass es zumindest einen Teil der Scheibe (D) abdeckt;
wobei der Bremsstaubsammler **gekennzeichnet ist durch**:
einen Hauptbefestigungsabschnitt (221) mit einem Hauptbefestigungsloch (221a), das so ausgebildet ist, dass es einen hinteren Abschnitt des Gehäuses (200) in radialer Richtung durchdringt; und
ein Hauptfiltermodul (300) mit einem Hauptfilter (310), der in dem Hauptbefestigungsloch (221a) vorgesehen ist, und einer Hauptfilterabdeckung (320), **durch** die zumindest ein Hauptströmungsloch (321) so ausgebildet ist, dass es diese durchdringt, und die so konfiguriert ist, dass sie den Hauptfilter (310) stützt,
wobei das Hauptfiltermodul (300) so konfiguriert ist, dass es von dem Hauptbefestigungsabschnitt (221) abgenommen werden kann.

2. Bremsstaubsammler nach Anspruch 1, wobei das Hauptfiltermodul (300) mit dem Hauptbefestigungsabschnitt (221) verschraubt ist.

3. Bremsstaubsammler nach Anspruch 2, wobei der Hauptbefestigungsabschnitt (221) ferner umfasst:
eine Befestigungshalterung (221b), die so ausgebildet ist, dass sie in radialer Richtung vorsteht; und
ein Befestigungsloch, das so ausgebildet ist, dass es die Befestigungshalterung (221b) in einer Richtung quer zu der Scheibe (D) durchdringt,
wobei das Hauptfiltermodul (300) und die Befestigungshalterung (221b) mit einem Bolzen verschraubt sind, der durch das Befestigungsloch der Befestigungsklammer (221b) hindurchtritt.

4. Bremsstaubsammler nach einem der vorhergehenden Ansprüche, wobei der Hauptfilter (310) aus einem korrosions- und hitzebeständigen Metall hergestellt ist.

5. Bremsstaubsammler nach einem der vorhergehenden Ansprüche, wobei die Hauptfilterabdeckung (320) so montiert ist, dass eine Endseite der Hauptfilterabdeckung (320) in einem vorbestimmten Abstand von dem Gehäuse (200) oder dem Hauptbefestigungsabschnitt (221) positioniert ist.

6. Bremsstaubsammler nach einem der vorhergehenden Ansprüche, wobei die Hauptfilterabdeckung (320) einen äußeren Umfangsabschnitt, der in einer Richtung parallel zu einer äußeren Umfangsfläche der Scheibe (D) ausgebildet ist, und ein Paar planarer Abschnitte, die in einer Richtung parallel zu beiden Seitenflächen der Scheibe (D) angeordnet sind, umfasst, und
das Hauptströmungsloch (321) so ausgebildet ist, dass es zumindest einen von dem äußeren Umfangsabschnitt oder dem Paar planarer Abschnitte durchdringt.

7. Bremsstaubsammler nach Anspruch 6, wobei das Hauptströmungsloch (321) in dem äußeren Umfangsabschnitt vorgesehen ist und so ausgebildet ist, dass es so geneigt ist, dass zwischen einer Mittelachse des Hauptströmungslochs (321) und einer Tangente zu der äußeren Umfangsfläche der Scheibe (D) ein nicht senkrechter Winkel vorhanden ist.

8. Bremsstaubsammler nach einem der vorhergehenden Ansprüche, wobei das Gehäuse (200) als Monoblock ausgebildet ist.

9. Bremsstaubsammler nach einem der vorhergehenden Ansprüche, ferner umfassend:
einen Unterbefestigungsabschnitt (231) mit einem Unterbefestigungsloch (231a), das so ausgebildet ist, dass es ein Fenster (230) des Gehäuses (200) in radialer Richtung durchdringt; und
ein Unterfiltermodul (400), das so vorgesehen ist, dass es von dem Unterbefestigungsabschnitt (231) abgenommen werden kann, und das einen Unterfilter (410), der in dem Unterbefestigungsloch (231a) vorgesehen ist, und
eine Unterfilterabdeckung (420), die so konfiguriert ist, dass sie den Unterfilter (410) stützt, umfasst.

10. Bremsstaubsammler nach Anspruch 9, wobei das Unterfiltermodul (400) mit dem Unterbefestigungsabschnitt (231) verschraubt ist.

11. Bremsstaubsammler nach Anspruch 9 oder 10, wobei die Unterfilterabdeckung (420) weiterhin eine Rippe, die so ausgebildet ist, dass sie von einer Außenfläche vorsteht, und ein Befestigungsloch, das so ausgebildet ist, dass es die Rippe durchdringt, umfasst, und
das Unterfiltermodul (400) und die Rippe miteinander gekoppelt sind und das Unterfiltermodul (400) durch ein Bolzenelement, das das in der Rippe ausgebildete Befestigungsloch durchdringt, mit dem Gehäuse (200) oder dem Unterbefestigungsabschnitt (231) verschraubt ist.

12. Bremsstaubsammler nach einem der Ansprüche 9 bis 11, wobei der Unterfilter (410) aus einem korrosions- und hitzebeständigen Metall hergestellt ist.

13. Bremsstaubsammler nach einem der Ansprüche 9 bis 12, wobei die Unterfilterabdeckung (420) mit zumindest einem Teil einer Bodenfläche in einem vorbestimmten Abstand von dem Gehäuse (200) oder dem Unterbefestigungsabschnitt (231) montiert ist.

14. Bremsstaubsammler nach Anspruch 13, wobei die Unterfilterabdeckung (420) einen Strömungskanal (422) umfasst, der so ausgebildet ist, dass er an der Bodenfläche vertieft ist, und so ausgebildet ist, dass er sich von einem vorderen Abschnitt zu einem hinteren Abschnitt der Unterfilterabdeckung (420) erstreckt.

## Revendications

1. Dépoussiéreur de frein, comprenant :
une paire de plaquettes (100) de frein disposées de chaque côté d'un disque (D) prévu pour tourner avec une roue, ladite paire de plaquettes (100) étant mobile en contact avec le disque (D) ou séparées de celui-ci ;
un carter (200) où sont logées les plaquettes (100) de frein, et prévu pour recouvrir au moins une partie du disque (D) ; ledit dépoussiéreur de frein étant **caractérisé par** une partie de fixation principale (221) présentant un trou de fixation principal (221a) formé de manière à traverser une partie arrière du carter (200) dans une direction radiale ; et
un module de filtre principal (300) comprenant un filtre principal (310) disposé dans le trou de fixation principal (221a) et un couvercle de filtre principal (320) dans lequel est formé de manière traversante au moins un trou d'écoulement principal (321), et prévu pour supporter le filtre principal (310),
où le module de filtre principal (300) est prévu de manière à être détachable de la partie de fixation principale (221).

2. Dépoussiéreur de frein selon la revendication 1, où le module de filtre principal (300) est boulonné à la partie de fixation principale (221).

3. Dépoussiéreur de frein selon la revendication 2, où la partie de fixation principale (221) comprend en outre :
un support de fixation (221b) formé de manière à faire saillie dans la direction radiale ; et
un trou de fixation formé de manière à traverser le support de fixation (221b) dans une direction transversale au disque (D),
où le module de filtre principal (300) et le support de fixation (221b) sont boulonnés par un boulon passé dans le trou de fixation du support de fixation (221b).

4. Dépoussiéreur de frein selon l'une des revendications précédentes, où le filtre principal (310) est constitué d'un métal présentant une résistance à la corrosion et une résistance à la chaleur.

5. Dépoussiéreur de frein selon l'une des revendications précédentes, où le couvercle de filtre principal (320) est monté de sorte qu'un côté d'extrémité du couvercle de filtre principal (320) est placé à une distance prédéterminée du carter (200) ou de la partie de fixation principale (221).

6. Dépoussiéreur de frein selon l'une des revendications précédentes, où le couvercle de filtre principal (320) comprend une partie circonférentielle extérieure formée dans une direction parallèle à une surface circonférentielle extérieure du disque (D) et une paire de parties planes disposées dans une direction parallèle aux deux surfaces latérales du disque (D), et où
le trou d'écoulement principal (321) est formé de manière à traverser la partie circonférentielle extérieure et/ou la paire de parties planes.

7. Dépoussiéreur de frein selon la revendication 6, où l'orifice d'écoulement principal (321) est prévu dans la partie circonférentielle extérieure et est formé de manière inclinée, de sorte qu'un angle non droit est présenté entre un axe central de l'orifice d'écoulement principal (321) et une tangente à la surface circonférentielle extérieure du disque (D).

8. Dépoussiéreur de frein selon l'une des revendications précédentes, où le carter (200) est formé d'un seul tenant.

9. Dépoussiéreur de frein selon l'une des revendications précédentes, comprenant en outre :
une partie de fixation secondaire (231) présentant un trou de fixation secondaire (231a) formé de manière à traverser une fenêtre (230) du carter (200) dans la direction radiale ; et
un module de filtre secondaire (400) prévu pour être détachable de la partie de fixation secondaire (231) et comprenant un filtre secondaire (410) disposé dans le trou de fixation secondaire (231a) et un couvercle de filtre secondaire (420) prévu pour supporter le filtre secondaire (410).

10. Dépoussiéreur de frein selon la revendication 9, où le module de filtre secondaire (400) est boulonné à la partie de fixation secondaire (231).

11. Dépoussiéreur de frein selon la revendication 9 ou la revendication 10, où le couvercle de filtre secondaire (420) comprend en outre une nervure formée de manière à faire saillie d'une surface extérieure, et un trou de fixation formé de manière à traverser la nervure, et où
le module de filtre secondaire (400) et la nervure sont raccordés l'un à l'autre, et le module de filtre secondaire (400) est boulonné au carter (200) ou à la partie de fixation secondaire (231) par un élément de boulon engagé dans le trou de fixation formé dans la nervure.

12. Dépoussiéreur de frein selon l'une des revendications 9 à 11, où le sous-filtre (410) est constitué d'un métal présentant une résistance à la corrosion et une résistance à la chaleur.

13. Dépoussiéreur de frein selon l'une des revendications 9 à 12, où le couvercle de filtre secondaire (420) est monté avec au moins une partie d'une surface inférieure à espacement prédéterminé du carter (200) ou de la partie de fixation secondaire (231).

14. Dépoussiéreur de frein selon la revendication 13, où le couvercle de filtre secondaire (420) comprend un passage d'écoulement (422) formé en renfoncement sur la surface inférieure et de manière à s'étendre d'une partie avant à une partie arrière du couvercle de filtre secondaire (420).
